# EUROPEAN PATENT SPECIFICATION

(11) **EP 1 756 233 B1**
(45) Date of publication and mention of the grant of the patent: **20.04.2011**
(21) Application number: 05740255.4
(22) Date of filing: 11.05.2005
(51) Int. Cl.: C09B 67/22, C09D 11/00

(54) **MIXTURES OF FIBRE REACTIVE AZO DYES**
MISCHUNGEN VON FASERREAKTIVEN AZOFARBSTOFFEN
MELANGES DE TEINTURES AZO REAGISSANT AVEC LES FIBRES

(30) Priority: 24.05.2004 GB 0411589
(43) Date of publication of application: 28.02.2007
(73) Proprietor: DyStar Colours Deutschland GmbH, 65926 Frankfurt am Main (DE)
(72) Inventor: EBENEZER, Warren James, Stockport Greater Manchester SK7 2JQ (GB); RUSS, Werner, Hubert, 65439 Flörsheim-Wicker (DE)
(86) International application number: PCT/EP2005/052149
(87) International publication number: WO 2005/116144

(56) References cited:
- EP-A- 0 170 612
- EP-A- 0 409 778
- WO-A-97/08246
- CH-A5- 672 794
- DE-A1- 3 443 962
- DATABASE WPI Section Ch, Week 200173 Derwent Publications Ltd., London, GB; Class A60, AN 2001-629368 XP002339043 -& JP 2001 200175 A (SUMITOMO CHEM CO LTD) 24 July 2001 (2001-07-24)

## Description

The present invention relates to the field of fibre-reactive dyes.

Bis-azo reactive dyestuffs containing amino-substituted chlorotriazines as reactive groups are known from literature and are described for example in EP-A-0170612 and DE-A-3443962. DE-A-3443962 discloses dyestuffs according to formula (I), 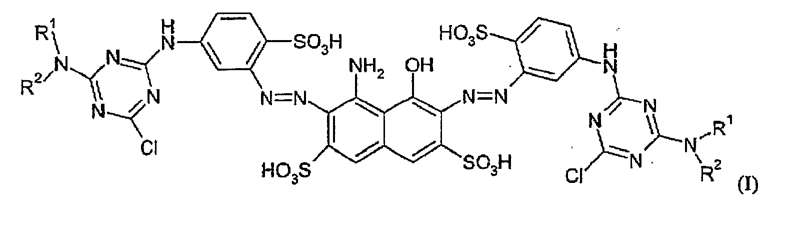 wherein both amino moieties -NR¹R² are identical. EP-A-0170612 discloses dyestuffs based on H- or K-acid where the two amino substituents can be identical or different.

The inventors of the present invention have surprisingly found that dyestuff mixtures according to the general formula (II-a) to (II-d) 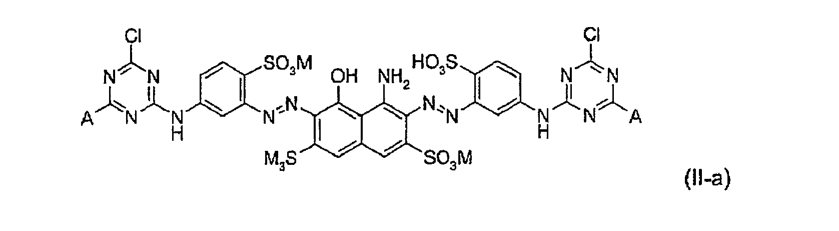 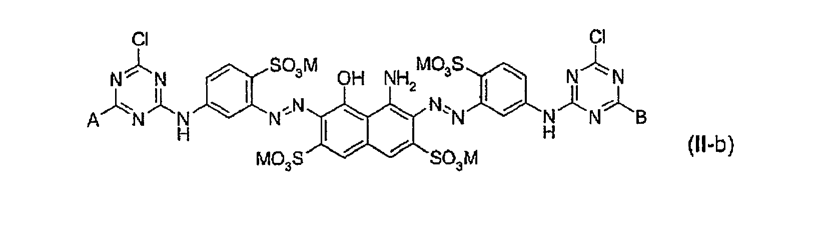 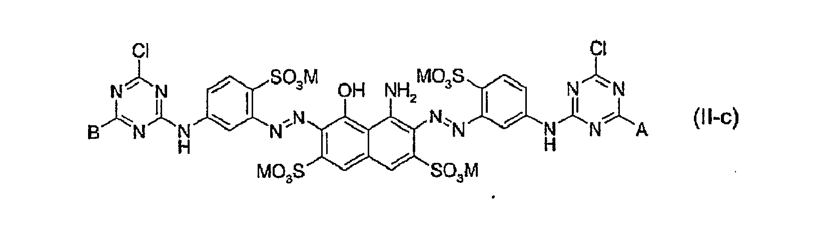 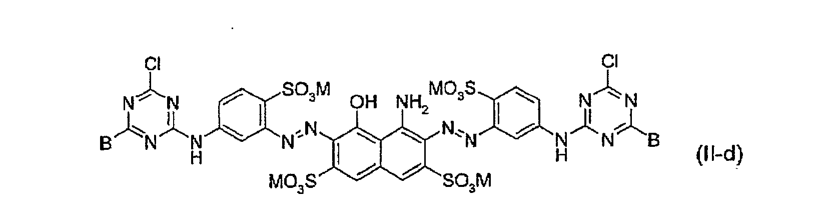 which are obtained by the use of a mixture of amines (A and B) in one of the reaction sequences (a) or (b). 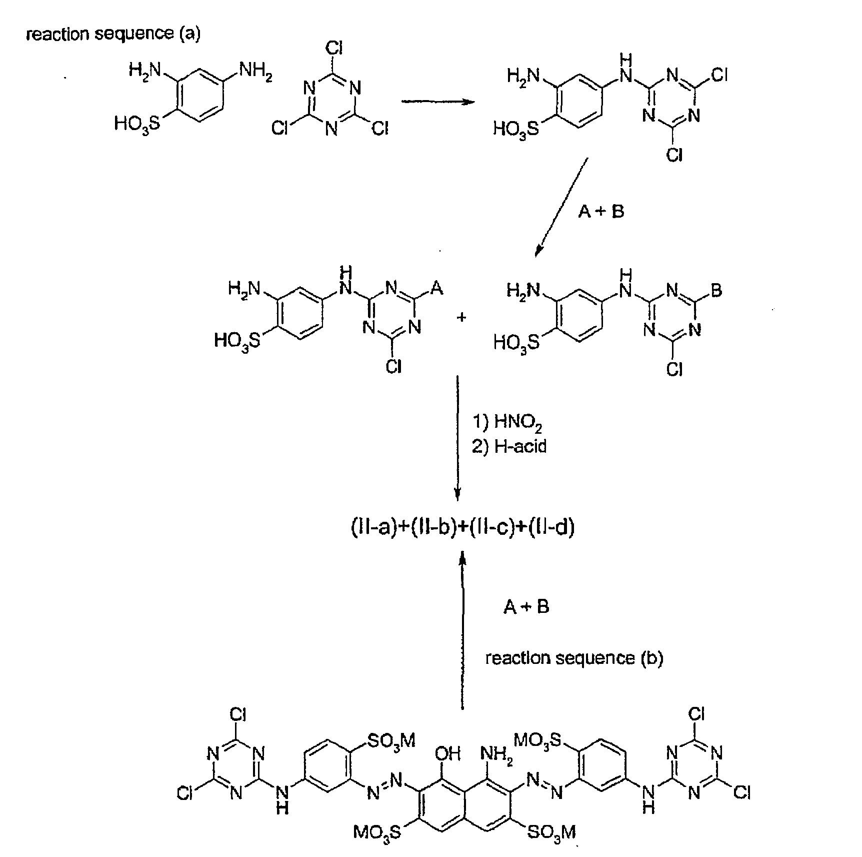 give excellent levels of build up, if at least one of the amines, A or B, used is diisopropanolamine.

Thus the present invention claims mixtures of reactive dyestuffs comprising one dyestuff of the formula (II-a) and at least one of the dyestuffs (II-b) to (II-d) 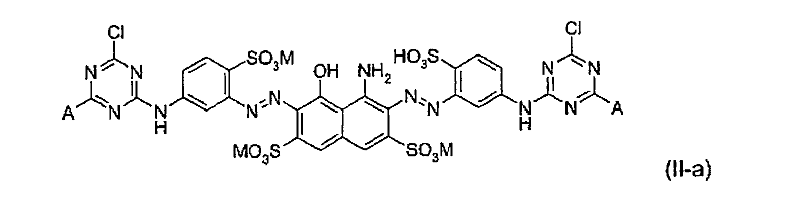 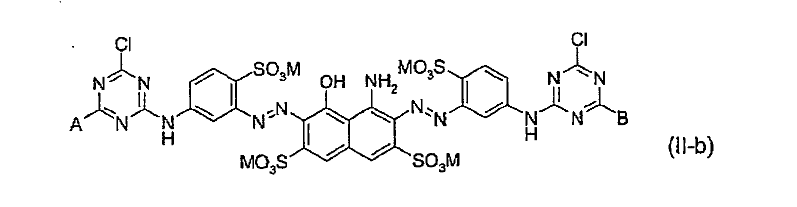 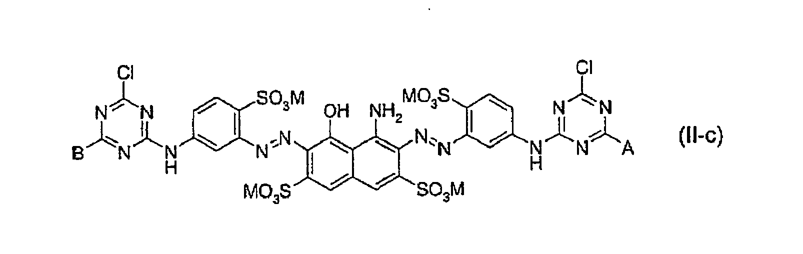 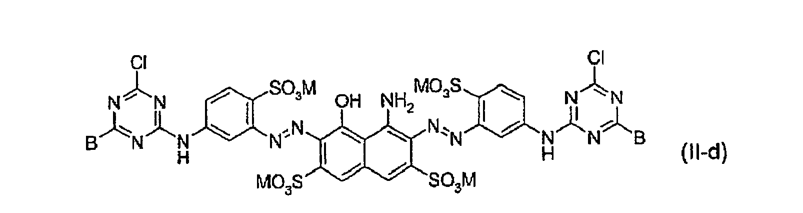 wherein
M is H, an alkali metal, an ammonium ion or the equivalent of an alkaline earth metal and is preferably H, sodium or potassium;
A is diisopropanolamine
B is an amine of one of the general formulae B-1 to B-8 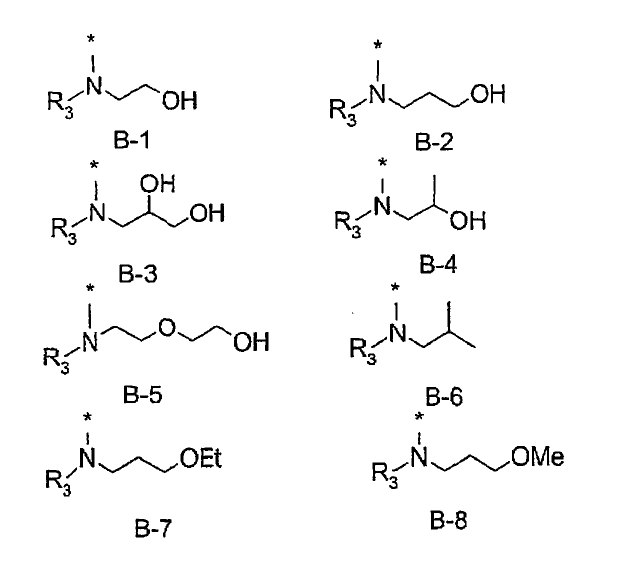 wherein R₃ is Hydrogen, Methyl, Ethyl, n-Propyl, i-Propyl, β-Hydroxyethyl, Hydroxypropyl, β-Cyanoethyl, β-carboxyethyl.
R₃ is preferably hydroxyethyl.

The mixture of amines A and B can vary in the molar ratio of A: B between 75:25 and 25:75 especially 50:50.

Similar fibre reactive disazo dyes are disclosed in EP,A,409,778 bearing e.g. a 2-hydroxypropylamine substituent, suitable for dyeing hydroxy containing substrates.

The dyestuff mixtures of the present invention can be present as a preparation in solid or liquid (dissolved) form. In solid form they generally contain the electrolyte salts customary in the case of water-soluble and in particular fibre-reactive dyes, such as sodium chloride, potassium chloride and sodium sulfate, and also the auxiliaries customary in commercial dyes, such as buffer substances capable of establishing a pH in aqueous solution between 3 and 7, such as sodium acetate, sodium borate, sodium bicarbonate, sodium citrate, sodium dihydrogen-phosphate and disodium hydrogenphosphate, small amounts of siccatives or, if they are present in liquid, aqueous solution (including the presence of thickeners of the type customary in print pastes), substances which ensure the permanence of these preparations, for example mold preventatives.

In general, the dyestuff mixtures of the present invention are present as dye powders containing 10 to 80% by weight, based on the dye powder or preparation, of a strength-standardizing colorless diluent electrolyte salt, such as those mentioned above. These dye powders may additionally include the aforementioned buffer substances in a total amount of up to 10%, based on the dye powder. If the dye mixtures of the present invention are present in aqueous solution, the total dye content of these aqueous solutions is up to about 50 % by weight, for example between 5 and 50% by weight, and the electrolyte salt content of these aqueous solutions will preferably be below 10% by weight, based on the aqueous solutions. The aqueous solutions (liquid preparations) may include the aforementioned buffer substances in an amount which is generally up to 10% by weight, for example 0.1 to 10% by weight, preference being given to up to 4% by weight, especially 2 to 4% by weight.

The dyestuff mixtures of the instant invention are reactive dyestuff mixtures suitable for dyeing and printing hydroxy- and/or carboxamido-containing fibre materials, by the application and fixing methods numerously described in the art for fibre-reactive dyes. They provide exceptionally bright, exceptionally strong and economic shades. Such dyestuff mixtures especially when used for exhaust dyeing of cellulosic materials can exhibit excellent properties including build-up, aqueous solubility, light-fastness, wash off and robustness to process variables. They are also wholly compatible with similar dyes designed for high temperature (80-100°C) application to cellulosic textiles, and thus lead to highly reproducible application processes, with short application times.

The present invention therefore also provides for use of the inventive dyestuffs for dyeing and printing hydroxy- and/or carboxamido-containing fibre materials and processes for dyeing and printing such materials using a dyestuff according to the invention. Usually the dyestuff is applied to the substrate in dissolved form and fixed on the fibre by the action of an alkali or by heating or both.

Hydroxy-containing materials are natural or synthetic hydroxy-containing materials, for example cellulose fiber materials, including in the form of paper, or their regenerated products and polyvinyl alcohols. Cellulose fiber materials are preferably cotton but also other natural vegetable fibers, such as linen, hemp, jute and ramie fibres. Regenerated cellulose fibers are for example staple viscose and filament viscose.

Carboxamido-containing materials are for example synthetic and natural polyamides and polyurethanes, in particular in the form of fibers, for example wool and other animal hairs, silk, leather, nylon-6,6, nylon-6, nylon-11, and nylon-4.

Application of the inventive dyestuff mixtures is by generally known processes for dyeing and printing fiber materials by the known application techniques for fibre-reactive dyes. The dyestuffs according to the invention are highly compatible with similar dyes designed for high temperature (80-100°C) applications and are advantageously useful in exhaust dyeing processes. Similarly, the conventional printing processes for cellulose fibers, which can either be carried out in single-phase, for example by printing with a print paste containing sodium bicarbonate or some other acid-binding agent and the colorant, and subsequent steaming at appropriate temperatures, or in two phases, for example by printing with a neutral or weakly acid print paste containing the colorant and subsequent fixation either by passing the printed material through a hot electrolyte-containing alkaline bath or by over padding with an alkaline electrolyte-containing padding liquor and subsequent batching of this treated material or subsequent steaming or subsequent treatment with dry heat, produce strong prints with well defined contours and a clear white ground. Changing fixing conditions has only little effect on the outcome of the prints. Not only in dyeing but also in printing the degrees of fixation obtained with dye mixtures of the invention are very high. The hot air used in dry heat fixing by the customary thermofix processes has a temperature of from 120 to 200°C. In addition to the customary steam at from 101 to 103°C, it is also possible to use superheated steam and high pressure steam at up to 160°C.

Acid-binding agents responsible for fixing the dyes to cellulose fibers are for example water-soluble basic salts of alkali metals and of alkaline earth metals of inorganic or organic acids, and compounds which release alkali when hot. Of particular suitability are the alkali metal hydroxides and alkali metal salts of weak to medium inorganic or organic acids, the preferred alkali metal compounds being the sodium and potassium compounds. These acid-binding agents are for example sodium hydroxide, potassium hydroxide, sodium carbonate, sodium bicarbonate, potassium carbonate, sodium formate, sodium dihydrogen-phosphate and disodium hydrogenphosphate.

Treating the dyestuffs according to the invention with the acid-binding agents with or without heating binds the dyes chemically to the cellulose fibers. Especially the dyeings on cellulose, after they have been given the usual after treatment of rinsing to remove unfixed dye portions, show excellent properties.

The dyeings of polyurethane and polyamide fibers are customarily carried out from an acid medium. The dyebath may contain for example acetic acid and/or ammonium sulfate and/or acetic acid and ammonium acetate or sodium acetate to bring it to the desired pH. To obtain a dyeing of acceptable levelness it is advisable to add customary leveling auxiliaries, for example based on a reaction product of cyanuric chloride with three times the molar amount of an aminobenzenesulfonic acid or aminonaphthalenesulfonic acid or based on a reaction product of for example stearylamine with ethylene oxide. In general the material to be dyed is introduced into the bath at a temperature of about 40°C and agitated therein for some time, the dyebath is then adjusted to the desired weakly acid, preferably weakly acetic acid, pH, and the actual dyeing is carried out at temperature between 60 and 98°C. However, the dyeings can also be carried out at the boil or at temperatures up to 120°C (under superatmospheric pressure).

The inventive dyestuff mixtures can in addition be used to produce inks useful for printing the substrates described above, for example textiles, especially cellulosic textiles, and paper.

If used in the inkjet process the inventive dyestuffs are formulated in aqueous inks, which then are sprayed in small droplets directly onto the substrate. There is a continuous process, in which the ink is pressed piezoelectrically through a nozzle at a uniform rate and deflected onto the substrate by an electric field, depending on the pattern to be produced, and there is an interrupted inkjet or drop-on-demand process, in which the ink is expelled only where a colored dot is to be placed. The latter form of the process employs either a piezoelectric crystal or a heated cannula (bubble or thermojet process) to exert pressure on the ink system and so eject an ink droplet. These techniques are described in Text. Chem. Color, volume 19 (8), pages 23 ff. and volume 21, pages 27 ff.

The printing inks for the inkjet process contain the inventive dyestuff mixtures in amounts, for example, of from 0.1 % by weight to 50% by weight, preferably in amounts of from 1% by weight to 30% by weight, and with particular preference in amounts of from 5% by weight to 25% by weight, based on the total weight of the ink. The pH of these printing inks is preferably adjusted to 7.0 to 9.0 by use of a suitable buffer system. This system is used in amounts of 0.1-3% by weight, preferably in 0.5-1.5% by weight, based on the total weight of the ink.

Useful buffer systems for printing inks include for example borax, disodium hydrogenphosphate, modified phosphonates, and buffer systems as described in: "Chemie der Elemente", VCH Verlagsgesellschaft mbH, 1st edition 1988, pages 665 to 666, Holleman-Wiberg, Lehrbuch der anorganischen Chemie, WDG & Co. Verlage 47th to 56th edition, pages 109 to 110, Laborchemikalienverlag der Fa. MERCK, Darmstadt, Ausgabe 1999, pages 1128 to 1133, "Der Fischer Chemicals Katalog" (Fischer Scientific UK, 1999) pages 409 to 411, Riedel-de Haën, Laborchemikalien 1996, pages 946 to 951, Riedel-de Haën, Labor-Hilfstabellen No. 6, buffer solutions.

The inventive dyestuff mixtures used in the inks of the inkjet process have in particular a salt content of less than 0.1 % by weight, for example 0.01 to 0.099% by weight, based on the weight of the dyestuffs. If necessary, the dyestuff mixture has to be desalted, for example by membrane separation processes, before use in the inks according to the invention. For use of inks in the continuous flow process, a conductivity of 0.5 to 25 mS/m can be set by adding an electrolyte. Useful electrolytes include for example lithium nitrate and potassium nitrate.

The inks for the inkjet process may include further organic solvents with a total content of 1-20%, preferably 1-15% by weight, based on the total ink weight. Suitable organic solvents include for example alcohols, such as methanol, ethanol, 1-propanol, isopropanol, 1-butanol, tert-butanol and pentyl alcohol; polyhydric alcohols, such as 1,2-ethanediol, 1,2,3-propanetriol, butanediol, 1,3-butanediol, 1,4-butanediol, 1,2-propanediol, 2,3-propanediol, pentanediol, 1,4-pentanediol, 1,5-pentanediol, 1,2-hexanediol, D,L-1,2-hexanediol, 1,6-hexanediol, and 1,2-octanediol; polyalkylene glycols, eg. polyethylene glycol, polypropylene glycol; alkylene glycols having 2 to 8 alkylene groups, eg. monoethylene glycol, diethylene glycol, triethylene glycol, tetraethylene glycol, thioglycol, thiodiglycol, butyltriglycol, hexylene glycol, propylene glycol, dipropylene glycol, tripropylene glycol; low alkyl ethers of polyhydric alcohols, eg. ethylene glycol monomethyl ether, ethylene glycol monoethyl ether, ethylene glycol monobutyl ether, diethylene glycol monomethyl ether, diethylene glycol monoethyl ether, diethylene glycol monobutyl ether, diethylene glycol monohexyl ether, triethylene glycol monomethyl ether, triethylene glycol monobutyl ether, tripropylene glycol monomethyl ether, tetraethylene glycol monomethyl ether, tetraethylene glycol monobutyl ether, tetraethylene glycol dimethyl ether, propylene glycol monomethyl ether, propylene glycol monoethyl ether, propylene glycol monobutyl ether and tripropylene glycol isopropyl ether; polyalkylene glycol ethers, eg. polyethylene glycol monomethyl ether, polypropylene glycol glycerol ether, polyethylene glycol tridecyl ether and polyethylene glycol nonylphenyl ether;
amines, eg. methylamine, ethylamine, triethylamine, diethylamine, dimethylamine, trimethylamine, dibutylamine, diethanolamine, triethanolamine, N-acetylethanolamine, N-formylethanolamine, ethylenediamine;
urea derivatives, eg. urea, thiourea, N-methylurea, N,N'-dimethylurea, ethyleneurea, 1,1,3,3-tetramethylurea;
amides, eg.: dimethylformamide, dimethylacetamide and acetamide;
ketones or ketoalcohols, eg. acetone and diacetone alcohol, cyclic ethers, eg. tetrahydrofuran, trimethylolethane, trimethylolpropane, 2-butoxyethanol, benzyl alcohol, 2-butoxyethanol, gamma-butyrolactone and ε-caprolactam;
also sulfolane, dimethylsulfolane, methylsulfolane, 2,4-dimethylsulfolane, dimethyl sulfone, butadiene sulfone, dimethyl sulfoxide, dibutyl sulfoxide, N-cyclohexylpyrrolidone, N-methyl-2-pyrrolidone, N-ethylpyrrolidone, 2-pyrrolidone, 1-(2-hydroxyethyl)-2-pyrrolidone, 1-(3-hydroxypropyl)-2-pyrrolidone, 1,3-dimethyl-2-imidazolidinone, 1,3-dimethyl-2-imidazolinone, 1,3-bismethoxymethylimidazolidine, 2-(2-methoxyethoxy)ethanol, 2-(2-ethoxyethoxy)ethanol, 2-(2-butoxyethoxy)ethanol, 2-(2-propoxyethoxy)ethanol, pyridine, piperidine, butyrolactone, trimethylolpropane, 1,2-dimethoxypropane, dioxane, ethyl acetate, ethylenediaminetetraacetate, ethyl pentyl ether, 1,2-dimethoxypropane and trimethylolpropane.

The printing inks for the inkjet process may further include the customary additives, for example viscosity moderators to set viscosities in the range from 1.5 to 40.0 mPa*s in a temperature range from 20 to 50°C. Preferred inks have a viscosity of 1.5 to 20 mPa*s and particularly preferred inks have a viscosity of 1.5 to 15 mPa*s.

Useful viscosity moderators include rheological additives, for example: polyvinylcaprolactam, polyvinylpyrrolidone and their copolymers, polyetherpolyol, associative thickeners, polyurea, polyurethane, sodium alginates, modified galactomannans, polyetherurea, polyurethane and nonionic cellulose ethers.

As further additives these inks may include surface-active substances to set surface tensions of 20 to 65 mN/m, which are adapted if necessary as a function of the process used (thermal or piezotechnology). Useful surface-active substances include for example:nonionic surfactants, butyldiglycol, 1,2-hexanediol.

The inks may further include customary additives, for example substances to inhibit fungal and bacterial growth in amounts of 0.01 to 1% by weight based on the total weight of the ink.

The inks may be prepared in a conventional manner by mixing their components in water in the desired proportions.

The Examples herein below serve to illustrate the invention. Parts and percentages are by weight, unless otherwise stated. Parts by weight relate to parts by volume as the kilogram relates to the liter.

The compounds described in the Examples in terms of a formula are indicated in the form of the free acids; in general, they are prepared and isolated in the form of their alkali metal salts, such as lithium, sodium or potassium salts, and used for dyeing in the form of their salts. The starting compounds and components mentioned in the following Examples, especially Table Examples, in the form of the free acid can similarly be used in the synthesis as such or in the form of their salts, preferably alkali metal salts.

### Example 1:

Diisopropanolamine (2.66g, 0.02mol) and diethanolamine (2.10g, 0.02mol) was added to a stirred solution of the bis-dichlorotriazinyl navy dye (1) (0.02mol) in water (200mls) at room temperature.

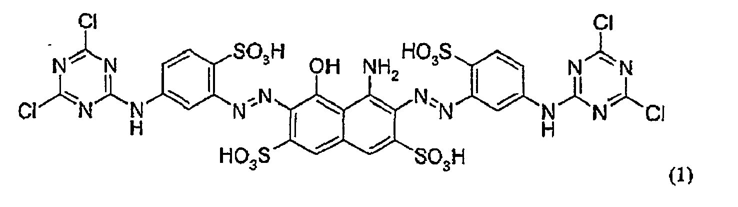

The pH of the mixture was adjusted to and maintained at 9 by the addition of 2N NaOH solution and the mixture was stirred overnight. Subsequent chromatography indicated the reaction to be complete and the solution was adjusted to pH 6 with 2N HCl, screened and dialysed to remove salt before evaporating to dryness to give the product as a dark powder (25.8g) which exhibited analytical data consistent with the expected mixture of products (II-1 to (II-4).

### max 604nm

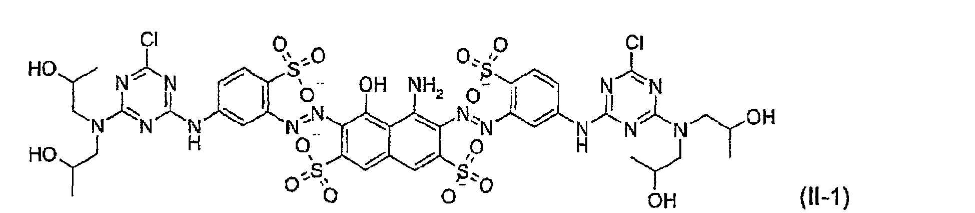

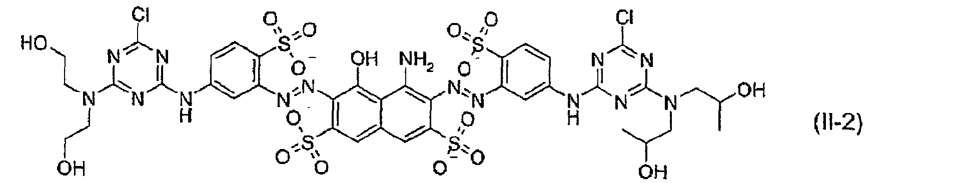

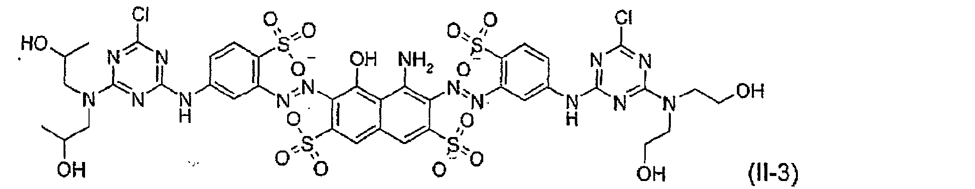

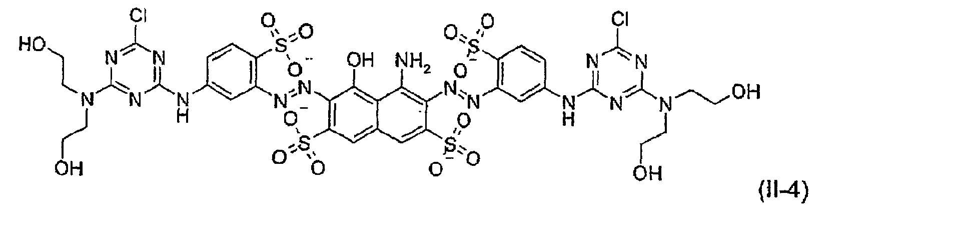

### Example 2

Diisopropanolamine (2.66g, 0.02mol) was added to a stirred solution of the bis-dichlorotriazinyl navy dye (1) (0.01 mol) in water (300mls) at room temperature. The pH of the mixture was adjusted to and maintained at 10 by the addition of 2N NaOH solution and the mixture was stirred overnight. Subsequent chromatography indicated the reaction to be complete and the solution was adjusted to pH 6 with 2N HCl and salt added to precipitate the product. The solid was isolated by filtration, dialysed and evaporated to give the product as a dark powder (8.3g) which exhibited analytical data consistent with the expected product (II-1). max 603nm max 50500.

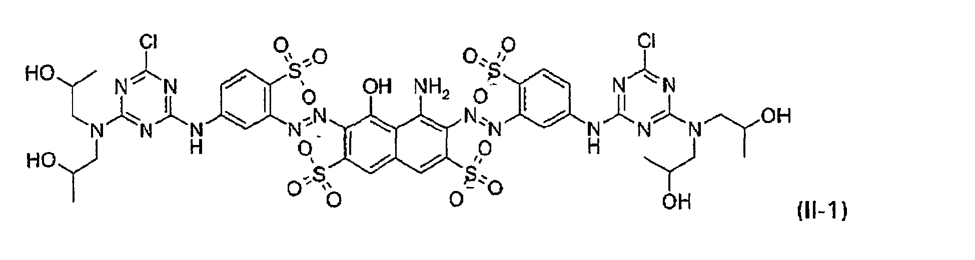

### Example 3

Diisopropanolamine (1.12g, 0.0084mol) and dl-1 -amino-2-propanol (0.315g, 0,0042mol) was added to a stirred solution of the bis-dichlorotriazinyl navy dye (1) (0.0063mol) in water (350mls) at room temperature. The pH of the mixture was adjusted to and maintained at 10 by the addition of 2N NaOH solution and the mixture was stirred for 4hrs. Subsequent chromatography indicated the reaction to be complete and the solution was adjusted to pH 6 with 2N HCl, screened and dialysed to remove salt before evaporating to dryness to give the product as a dark powder (9.9g) which exhibited analytical data consistent with the expected mixture of products (II-1), (II-5), (II-6), (II-7). max 605nm.

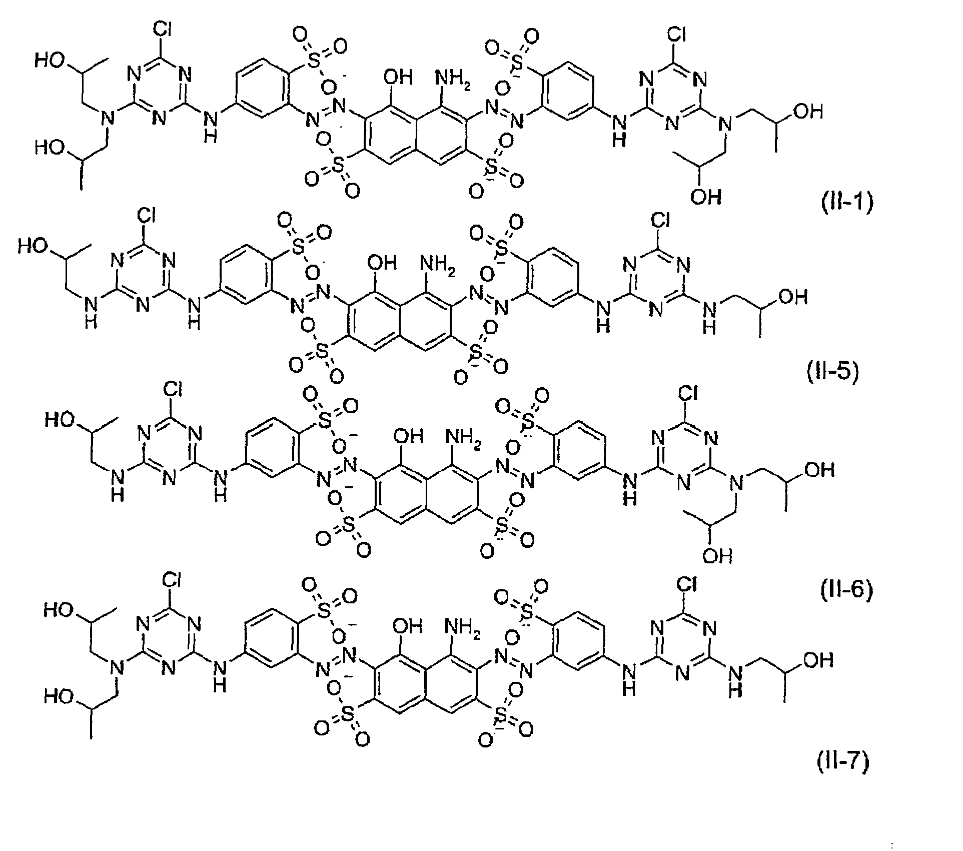

## Claims

1. Mixtures of reactive dyestuffs comprising one dyestuff of the formula (II-a) and at least one of the dyestuffs (II-b) to (II-d) 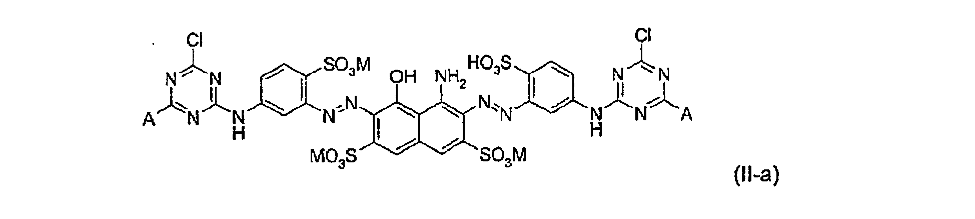 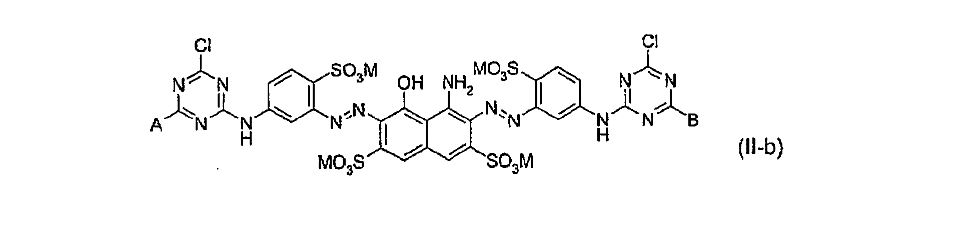 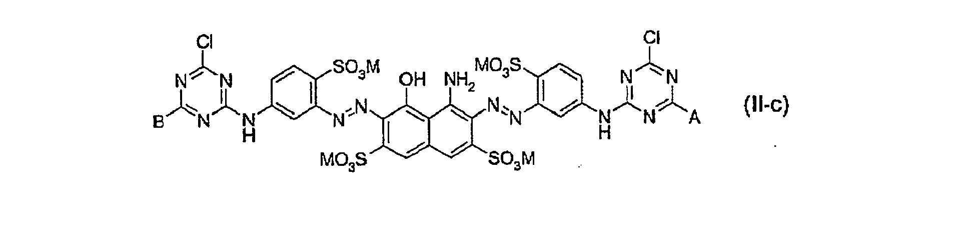 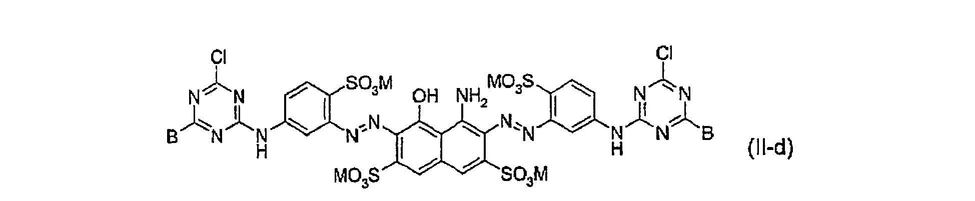 wherein
M is H, an alkali metal, an ammonium ion or the equivalent of an alkaline earth metal and is preferably H, sodium or potassium;
A is diisopropanolamine
B is an amine of one of the general formulae B-1 to B-8 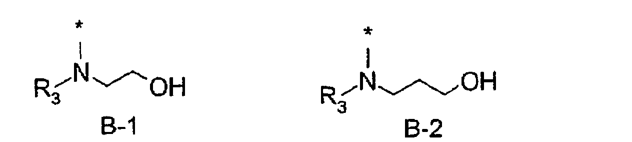 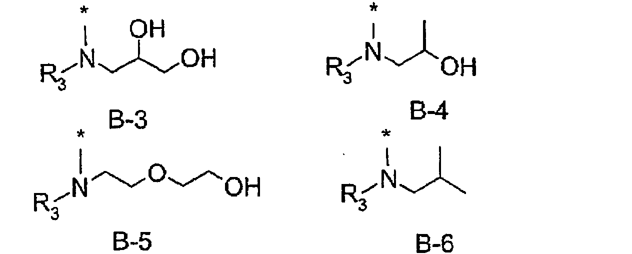 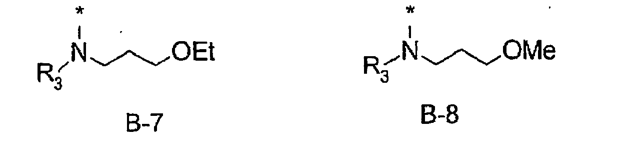 wherein R₃ is Hydrogen, Methyl, Ethyl, n-Propyl, i-Propyl, β-Hydroxyethyl, Hydroxypropyl, β-Cyanoethyl, β-Carboxyethyl.

2. Mixtures of reactive dyestuffs according to claim 1 where the ratio of dyestuff according to the formula (II-a) to the dyestuffs according to at least one of the formula (II-b) to (II-d) is from 75:25 to 25:75 by weight.

3. Mixtures of reactive dyestuffs according to claim 1 wherein R₃ is β-hydroxyethyl.

4. A process for preparing a mixture of reactive dyestuffs according to claim 1 by the use of a mixture of amines (A) and (B) wherein the ratio of amine (A) to amine (B) is from 75:25 to 25:75 in one of the reaction sequences (a) or (b) 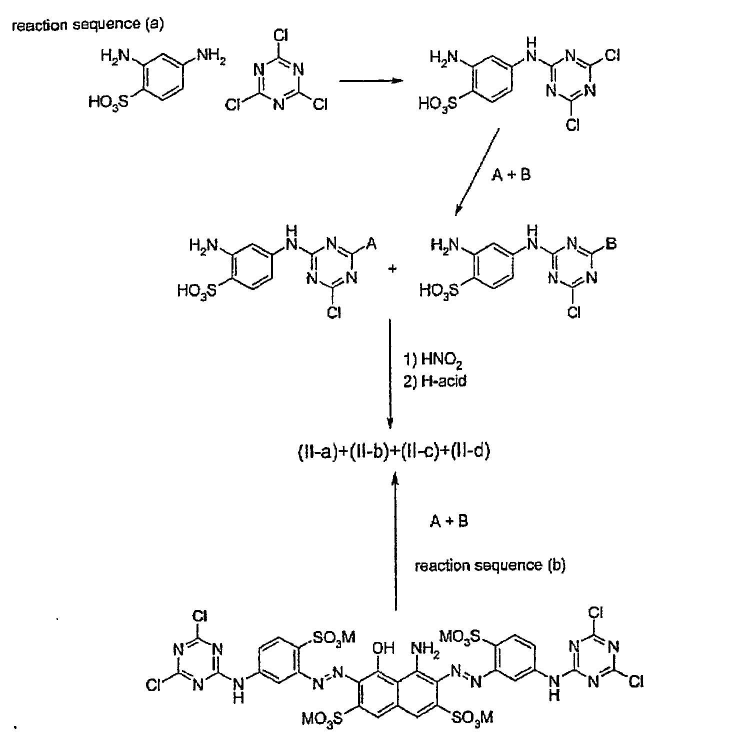 wherein A and B are as defined in claim 1.

5. A process for dyeing and printing hydroxy- and/or carboxamido-containing fibre materials in which a dyestuff of the formula I according to one or more of claims 1 or 2 is used.

6. Printing inks for the inkjet process comprising one or more inventive dyestuff mixtures according to claim 1.

7. Hydroxy- and/or carboxamido containing fibre materials having fixed dyestuff mixtures according to claim 1.

## Patentansprüche

1. Mischungen von Reaktivfarbstoffen, die einen Farbstoff der Formel (II-a) und mindestens einen der Farbstoffe (II-b) bis (II-d) 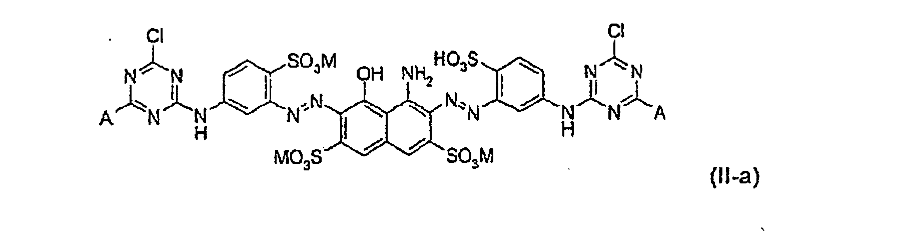 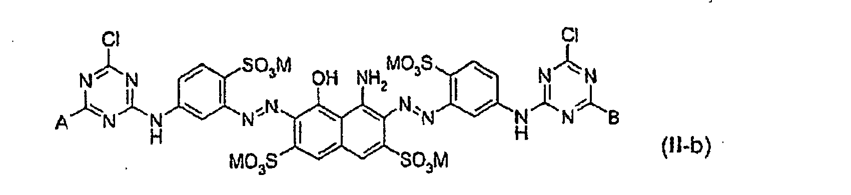 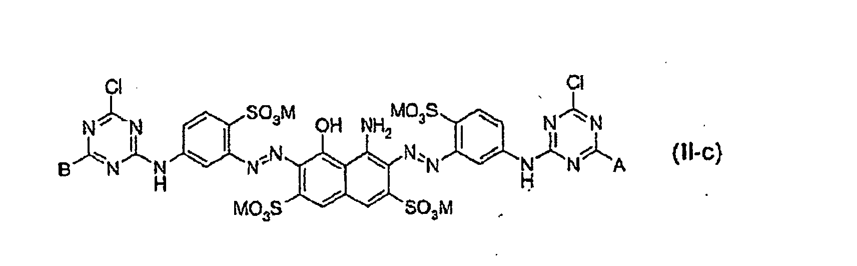 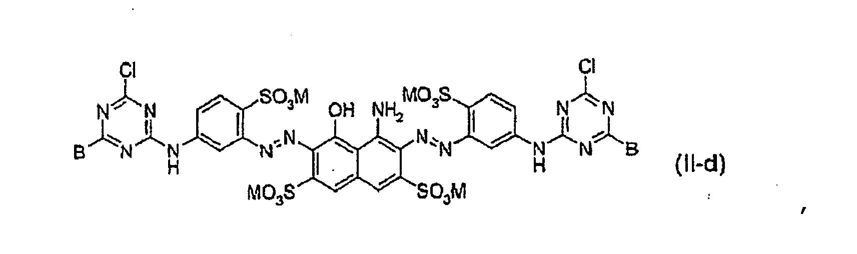 worin
M H, ein Alkalimetall, ein Ammoniumion oder das Äquivalent eines Erdalkalimetalls, bevorzugt H, Natrium oder Kalium,
A Diisopropanolamin und
B ein Amin einer der allgemeinen Formeln B-1 bis B-8 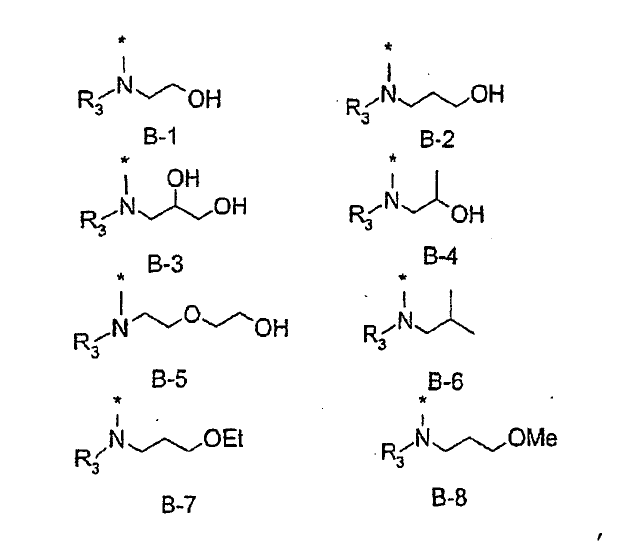 worin R₃ für Wasserstoff, Methyl, Ethyl, n-Propyl, i-Propyl, β-Hydroxyethyl, Hydroxypropyl, β-Cyanoethyl, β-Carboxyethyl steht, bedeutet, enthalten.

2. Mischungen von Reaktivfarbstoffen nach Anspruch 1, bei denen das Verhältnis des Farbstoffs gemäß der Formel (II-a) zu den Farbstoffen gemäß mindestens einer der Formeln (II-b) bis (II-d) dem Gewicht nach bei 75 zu 25 bis 25 zu 75 liegt.

3. Mischungen von Reaktivfarbstoffen nach Anspruch 1, bei denen R₃ für β-Hydroxyethyl steht.

4. Verfahren zur Herstellung einer Mischung von Reaktivfarbstoffen gemäß Anspruch 1, bei dem man in einer der Reaktionsfolgen (a) oder (b) 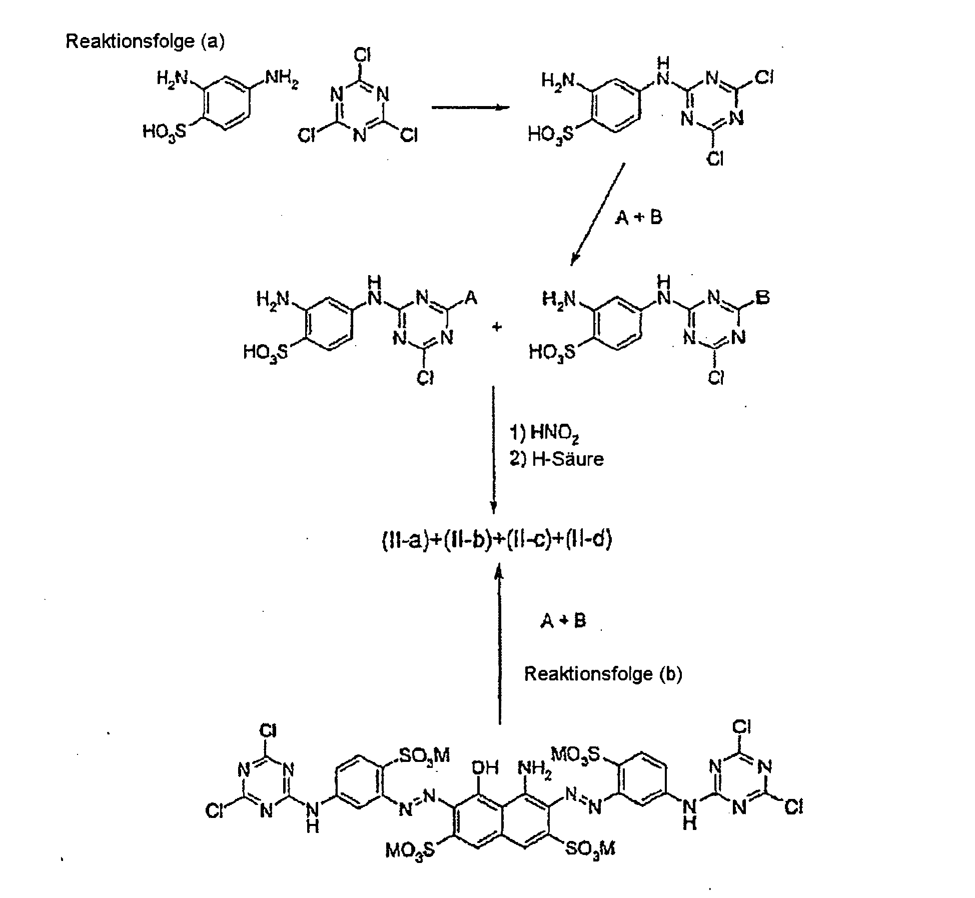 eine Mischung von Aminen (A) und (B) einsetzt, bei der das Verhältnis Amin (A) zu Amin (B) bei 75 zu 25 bis 25 zu 75 liegt,
wobei A und B die in Anspruch 1 genannte Bedeutung haben.

5. Verfahren zum Färben und Bedrucken von hydroxy-und/oder carbonamidgruppenhaltigen Fasermaterialien, bei dem man einen Farbstoff der Formel I
gemäß einem oder mehreren der Ansprüche 1 oder 2 einsetzt.

6. Drucktinten für das Farbstrahldruckverfahren, umfassend mindestens eine erfindungsgemäße Farbstoffmischung gemäß Anspruch 1.

7. Hydroxy- und/oder carbonamidgruppenhaltige Fasermaterialien mit fixierten Farbstoffmischungen gemäß Anspruch 1.

## Revendications

1. Mélanges de colorants réactifs comprenant un colorant de la formule (II-a) et l'un au moins des colorants (II-b) à (II-d) 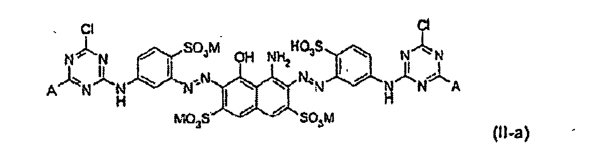 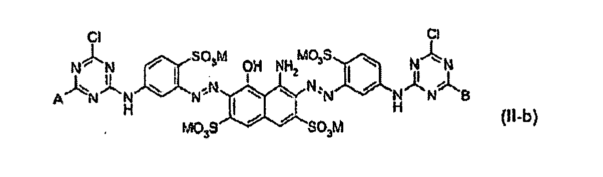 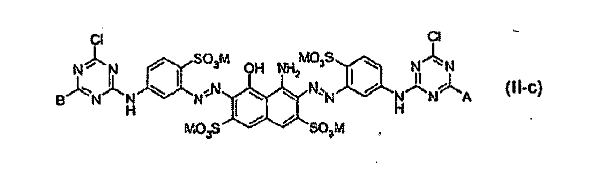 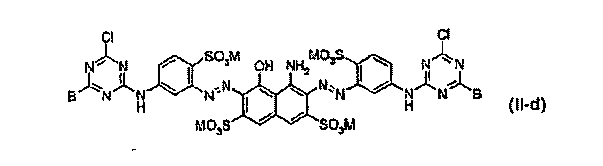 dans lesquels
M représente H, un métal alcalin, un ion ammonium ou l'équivalent d'un métal alcalino-terreux, et représente de préférence H, le sodium ou le potassium ;
A représente une diisopropanolamine ;
B représente une amine de l'une des formules générales B1 à B-8 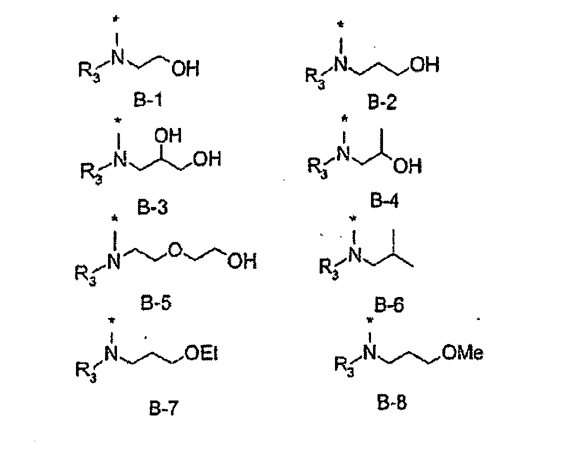 dans lesquelles R₃ représente un hydrogène, un groupe méthyle, éthyle, n-propyle, i-propyle, β-hydroxyéthyle, hydroxypropyle, β-cyanoéthyle ou β-carboxyéthyle.

2. Mélanges de colorants réactifs selon la revendication 1 dans lesquels le rapport entre le colorant répondant à la formule (II-a) et les colorants répondant à l'une au moins des formules (II-b) à (II-d) est de 75:25 à 25:75 en poids.

3. Mélanges de colorants réactifs selon la revendication 1 dans lesquels R₃ représente un groupe β-hydroxyéthyle.

4. Procédé de préparation d'un mélange de colorants réactifs selon la revendication 1 par l'utilisation d'un mélange d'amines (A) et (B) dans lequel le rapport entre l'amine (A) et l'amine (B) est de 75:25 à 25:75 dans l'une des séquences réactionnelles (a) et (b) 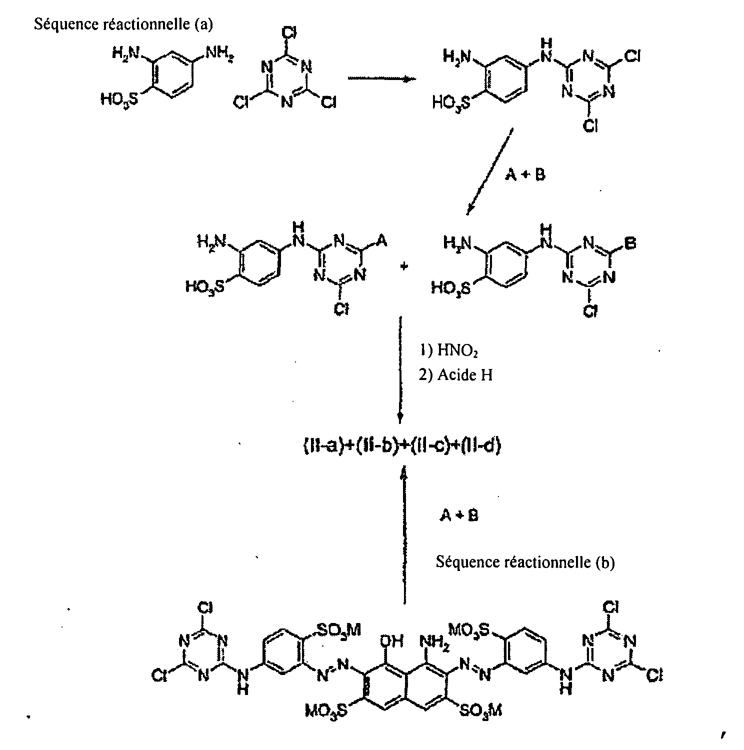 A et B étant tels que définis dans la revendication 1.

5. Procédé de coloration et d'impression de matériaux fibreux contenant des groupes hydroxyle et/ou carboxamido dans lequel est utilisé un colorant de la formule I selon l'une ou plusieurs des revendications 1 et 2.

6. Encres d'impression pour le procédé à jet d'encre comprenant un ou plusieurs mélanges de colorants selon la revendication 1.

7. Matériaux fibreux contenant des groupes hydroxyle et/ou carboxamido comportant des mélanges de colorants selon la revendication 1 fixés.
